# EUROPEAN PATENT APPLICATION

(11) **EP 1 293 706 A2**
(43) Date of publication of application: **19.03.2003**
(21) Application number: 02020763.5
(22) Date of filing: 16.09.2002
(51) Int. Cl.: F16H 25/22

(54) **Ball screw having multiply divided circulation passages**

(30) Priority: 17.09.2001 JP 2001282081
(71) Applicant: TOYODA KOKI KABUSHIKI KAISHA, Kariya-shi Aichi-ken (JP)
(72) Inventor: Kobayashi, Tsune, Kariya-shi, Aichi-ken (JP); Ishigami, Toshiya, Kariya-shi, Aichi-ken (JP); Fukumura, Kenichi, Kariya-shi, Aichi-ken (JP)
(74) Representative: Böckelen, Rainer

(57) **Abstract**

A deflector type ball screw includes a screw shaft having an external thread groove (24A) in an outer peripheral surface, a ball nut having an internal thread groove (28a) in an inner peripheral surface and a plurality of balls that are rollably housed between the internal thread groove and the external thread groove, and four deflectors (70) fixed to the ball nut. The deflectors function as by-passes linking adjacent internal thread grooves of the ball nut. As a result of the deflectors guiding the balls, the screw groove of the ball nut is divided into four circulation passages.

When a diameter d is the nominal diameter used in a case in which all of the balls of ball groups (72a) to (72d) have the same diameter; a diameter d1 is the ball diameter of the ball groups housed in first and fourth circulation passages; and a diameter d2 is the ball diameter of the ball groups housed in second and third circulation passages, d1=d and the relationship of 1.005d1≤d2≤1.1d1 is satisfied.

## Description

### BACKGROUND OF THE INVENTION

### 1. Field of the Invention

The invention power steering device or the relates to a ball screw that can be suitably used in an electric like.

### 2. Description of the Related Art

A ball screw is presently in widespread use that includes a screw shaft having an external thread groove in an outer peripheral surface, a ball nut having an internal thread groove in an inner peripheral surface and a plurality of balls that are rollably housed between the external thread groove and the internal thread groove. The ball screw converts the rotational movement of a bolt nut to a sliding movement of a screw shaft.

A ball screw has been developed in which a ball circulation passage is formed through a connection of a starting end and a finishing end of an internal groove of a bolt nut, thus ensuring an infinite sliding distance by a finite number of balls.

The ball circulation passage formed in the ball nut is divided (hereafter this type of ball screw will be referred to as a deflector type ball screw) into a plurality of circulation passages in an axial direction. Art has been proposed wherein a diameter d1 of balls housed in circulation passages at both ends of the axial direction is made smaller, and a diameter d2 of balls housed in a circulation passage inward in an axial direction from the end portion circulation passages, is made larger (Japanese Patent Laid-Open Publication No. JPA 2000-72008, Japanese Patent Laid-Open Publication No. 11-11334).

In the case of the ball screws that are disclosed in the above Japanese Patent Laid-Open Publications, when a bending moment, a sliding direction load and a radial direction load are acting upon a screw shaft, the diameter of the balls of both axial direction end portions, which are prone to the application of load, is small. On the other hand, the diameter of the balls of an axial direction center portion, which are not prone to the application of load, is large. As a result, the load applied to the balls of both axial direction end portions and the load applied to the balls of the axial direction center portion are equalized.

If the relationship of the diameter of the balls of both axial direction end portions, which are prone to the application of load, and the diameter of balls of the axial direction center portion, which are not prone to the application of load, is set appropriately, the load applied to the balls of both axial direction end portions and the load applied to the balls of the axial direction center portion are equalized. However, if the relationship of the diameter of the balls of both axial direction end portions and the diameter of the balls of the axial direction center portion is inappropriate, the load equalization effect is not obtained. For example, if the diameter of the balls of both axial direction end portions is too small, the load applied to the axial direction end portions becomes too small and load is concentrated on the balls of the axial direction center portion. Even if the diameter of the balls of both end portions is reduced, the load acting upon the balls of the axial direction end portions, which are prone to the application of load, is not reduced if the size of the reduction in diameter is not appropriate. As a result the load equalization effect is not obtained.

With regard to a magnitude of load that the ball screw can withstand and durability, smoothness of operation and quietness of operation of the ball screw, the most important factors are the maximum value of the load applied to each ball and the contact pressure between each ball and the screw groove (and within these contact pressures, the maximum value is the most important). The contact pressure is not only closely related to the load which is applied to each ball but also to the diameter of the ball. A contact area between the ball and screw groove changes depending on the diameter of the ball, and thus the contact pressure which depends on the contact area changes. It is necessary to reduce the diameter of the ball in order to reduce the load that is applied to the ball. However, this may lead to a rise in contact pressure since contact area is reduced when ball diameter is made smaller.

However, with existing art, it is unclear how the relationship should be set between the diameter of the balls of both axial direction end portions, which are prone to the application of load, and the diameter of the balls of the axial direction center portion, which are not prone to the application of load, in order to equalize the load applied to the balls of the axial direction end portions and the load applied to the balls of the axial direction center portion, and to reduce the maximum value of the contact pressure. In addition, it is also unclear under what settings the loads are not equalized and the contact pressure not reduced.

### SUMMARY OF THE INVENTION

In view of the previously mentioned circumstances, it is an object of the present invention to provide an art that reduces contact pressure by equalizing load that acts upon a group of balls of a deflector type ball screw (a ball screw in which a ball circulation passage formed in the ball nut is divided into a plurality of circulation passages in the axial direction of the ball nut).

During the process of completing the invention, the inventors constructed models for geometric analysis, motion analysis, contact analysis and load distribution analysis of the ball screw, and also completed a model capable of calculating the events occurring in the ball screw based on the design parameters of the ball screw. By completing this model, it became possible to conduct investigation while changing in various ways the diameter d1 of the balls housed in the circulation passages of both axial direction end portions of the ball nut, and the diameter d2 of balls housed in a circulation passage inward in an axial direction from the end portion circulation passages.

As a result of this investigation, it was confirmed that when the relationship of d1 to d2 is, 1.005d1 ≦d2≦1.1d1, the load applied to the balls of both axial direction end portions and the load applied to the balls of the axial direction center portion are equalized, and thus contact pressure is reduced.

The invented ball screw was completed as a result of this investigation. The ball screw according to the invention includes a screw shaft having an external thread groove in an outer peripheral surface, a ball nut having an internal thread groove in an inner peripheral surface and a plurality of balls that are rollably housed between the external thread groove and the internal thread groove. The internal thread groove of the ball screw is divided into at least three circulation passages in the axial direction of the ball nut. In the ball screw, the diameter d1 of balls housed in the circulation passages at both axial direction ends of the ball nut, and the diameter d2 of balls housed in a circulation passages inward in an axial direction from the end portion circulation passages are set to have the relationship of 1.005d1≦d2≦1.1d1.

If the deflector type ball screw that satisfies the aforementioned conditions is used, when a bending moment, a sliding direction load and a radial direction load are acting upon the screw shaft, the diameter of the balls of both axial direction end portions, which are prone to the application of load, is appropriately small and the diameter of the balls of the axial direction center portion, which are not prone to the application of load, is appropriately large. As a result, it has been confirmed that the load applied to the balls of both axial direction end portions and the load applied to the balls of the axial direction center portion are equalized.

Namely, if d2 is equal to or more than 1.005 times d1, it is possible to reliably reduce the load applied to the balls of the circulation passages at both axial direction end portions when load is applied to the screw shaft. Furthermore, if d2 is equal to or less than 1.1 times d1, it is possible to reliably inhibit the over concentration of load on the balls in the circulation passage of the axial direction center portion.

If the relationship of d1 to d2 is set as, 1.005d1≦d2≦1.1d1, it becomes possible for the applied load to be shared evenly by multiple balls rather than the load being concentrated on one particular section of balls. As a result, the ball screw can withstand a greater intensity of load and durability is improved.

Moreover, if load is concentrated on the balls in a particular circulation passage, a problem occurs in which the ball screw becomes unable to move smoothly. Alternatively, a state in which a large load is acting upon the balls circulating in the circulation passage and a state in which this load is removed are alternately repeated. Therefore, the balls begin to oscillate and this is liable to become the source of noise and vibration. If the conditions of the present invention are satisfied, the concentration of load on the balls in a particular circulation passage is prevented or reduced, the smooth movement of the ball screw is ensured and noise and vibration during the operation period of the ball screw is minimized.

In addition to the above conditions, it is preferable to set the aforementioned diameter d1 to a diameter that is substantially equal to a so-called nominal ball diameter d. The nominal diameter d is an appropriate diameter if balls with the same diameter are used in all of the circulation passages.

In this case, since the balls in the circulation passages of both axial direction end portions are of the nominal ball diameter, there is no reduction in the contact area between the balls and screw groove. Namely, the contact area is the same as it would be if the diameter of all the balls were set at the nominal diameter. If, under these conditions, the diameter of the balls in the circulation passage of the center portion is increased so that it is larger than the nominal diameter, the load that is applied to the balls in the circulation passage of both axial direction end portions is reduced. As a result, the contact pressure between the balls in the circulation passages at both axial direction end portions and the screw groove is also reduced. The load acting upon the balls in the circulation passages at both axial direction end portions, as well as the contact pressure, are reliably reduced. On the other hand, if the diameter of the balls in the circulation passage of the center portion is set to a larger value than the nominal diameter, the load that is applied to the balls in the circulation passage of the center portion is increased. However even in this case, the load applied to the balls in the circulation passage of the center portion is less than the load that is applied to the balls in the circulation passage at both axial direction end portions, compared to when all of the balls are set to the nominal value. Moreover, since the diameter of the balls is greater than the nominal diameter, the contact area between the balls and screw groove is increased, and as a result, the contact pressure between the balls in the circulation passage of the center portion and the screw groove is reduced.

A diameter d is an appropriate diameter in the case that balls of the same size are used in all of the circulation passages. If the diameter d1 of the balls in the circulation passages of both axial direction end portions is set to d, and the relationship of d1 and a diameter d2 of the balls housed in the circulation passage inward of the axial direction end portions is set at 1.005d1 ≦d2≦1.1d1, then the load that acts upon the balls is equalized and contact pressure is reduced.

If the aforementioned ball screw is adopted as a ball screw for use in an electric power steering device, a strength of the power steering device is increased, and durability, operation feeling and quietness thereof are improved.

### BRIEF DESCRIPTION OF THE DRAWINGS

Fig. 1 is a system view of an electric power steering device according to the invention;
Fig. 2 is a cross section view of the main portions of a deflector type ball screw, a rack shaft and an electric motor;
Fig. 3 is a cross section view of the main portions of the deflector type ball screw;
Fig. 4 is a graph showing the load applied to and the contact pressure of the balls when radial force is acting upon the rack shaft (in the case that d=d1=d2);
Fig. 5 is a graph showing the load applied to and the contact pressure of the balls when radial force is acting upon the rack shaft (in the case that d2=1. d1=d);
Fig. 6 is a graph showing the load applied to and the contact pressure of the balls when radial force is acting upon the rack shaft (in the case that d2=1.1d1, d1=d);
Fig. 7 is a graph showing the load applied to and the contact pressure of the balls when radial force is acting upon the rack shaft (in the case that d2=1.005d1, d1=d);
Fig. 8 is a graph showing the load applied to the balls when radial force is acting upon the rack shaft (in the case that d2=1.105d1, d1=d);
Fig. 9 is a graph showing the load applied to the balls when radial force is acting upon the rack shaft (in the case that d1=0.95d2 d2=d); and
Fig. 10 is a graph showing the nonuniform rate of the balls and amount of load variation.

### DETAILED DESCRIPTION OF THE PREFERRED EMBODIMENTS

Hereinafter, a preferred embodiment of the deflector type ball screw according to the aforementioned invention will be described.

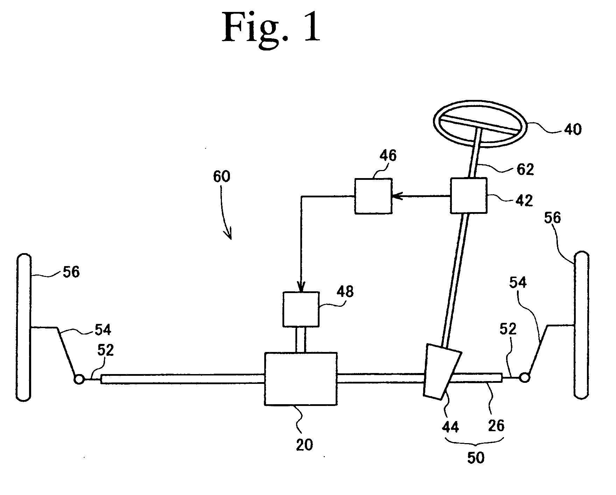

Referring to Fig. 1, hereinafter a structure of a power steering device (hereafter referred to as electric PS device) including the deflector type ball screw will be described. Fig. 1 is a schematic system diagram of the electric PS device.

The Electric PS device 60 includes a steering wheel 40, a shaft 62 that transmits a steering torque of the steering wheel, a pinion 44 fixed to a tip of the shaft 62 and a rack shaft 26 having rack teeth that engage with the pinion 44. A rack and pinion mechanism 50 composed of the pinion 44 and the rack shaft 26. Furthermore, the electric PS device 60 includes steering torque detection means 42 that detects a steering torque of the steering wheel 40, control means 46 that generates a control signal based on a detection signal of the steering torque detection means 42, an electric motor 48 that generates auxiliary torque based on the control signal of the control means 46 and a deflector type ball screw 20 that transmits the auxiliary torque of the electric motor 48 to the rack shaft 26.

Rack teeth that engage with the pinion 44 are formed in a longitudinal direction portion of the rack shaft 26, and a screw groove constituting the deflector type ball screw 20 is formed in another longitudinal direction portion of the rack shaft 26. Furthermore, a tie rod 52 is fixed to each end of the rack shaft 26. Each tie rod 52 is connected to one end of a respective knuckle arm 54, and each wheel 56 is mounted to another end of each respective knuckle arm 54.

With regard to the steering torque detection means 42 and the control means 46 that are components of the electric PS device 60, any components maybe employed as long as they are the same components as those provided in known electric PS devices. These components are not characteristics of the present invention.

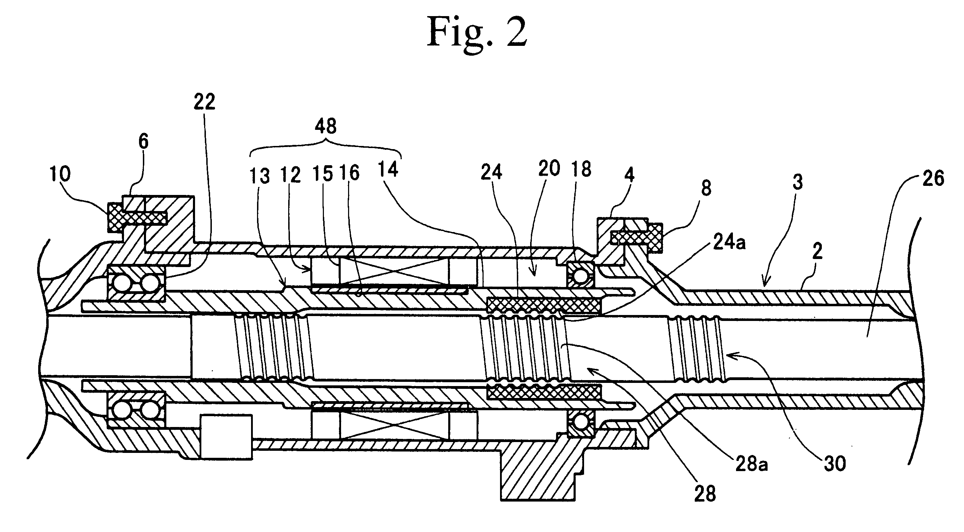

Referring to Fig. 2, hereinafter a structure of the electric motor 48 and the deflector type ball screw 20 will be described in detail. Fig. 2 is a cross section view of the main portions of the rack shaft 26, the electric motor 48 and deflector type ball screw 20.

An entire housing 3 is divided into three sections, that is, a first housing 2, a second housing 4 and a third housing 6, which are connected by bolts 8 and 10 with the second housing 4 at the center. Each housing 2, 4 and 6 has a substantially cylindrical shape, and the entire housing 3, which is formed by the connected housings 2, 3 and 6, also has a substantially cylindrical shape.

A stator 12 constituting the electric motor 48 is housed inside the second housing 4, and a stator coil 15 is provided inside the stator 12. Furthermore, a rotor 13 that constitutes the electric motor 48 with the stator 12 is housed in a space inside of the stator coil 15. The rotor 13 is supported such that it is rotatable but immovable in an axial direction by a bearing 18 provided on the second housing 4 and a bearing 22 provided on the third housing 6. The rotor 13 is constituted from the stator coil 15, a magnet 16 located facing the stator coil 15 and an output shaft 14 has a substantially cylindrical shape. A ball nut 24 is fixed to an inner surface of one end portion of the output shaft 14.

The rack shaft 26 extends through the entire housing 3 that has a substantially cylindrical shape. The rack shaft 26 is slidable with respect to the entire housing 3 and is prevented from rotating with respect to the entire housing 3 by a mechanism not shown. An external thread groove 28a is formed in a longitudinal portion of the rack shaft 26. The external thread groove 28a has a length equal to the distance that the rack shaft 26 slides, and constitutes the ball screw 20 with the ball nut 24. In this specification, the portion of the rack shaft 26 in which the external thread groove 28a is formed is referred to as a screw shaft 28. Rack teeth 30 that engage with the pinion 44 are formed in a longitudinal direction portion of the rack shaft 26 (in a portion other than the screw shaft 28). The rack teeth 30 are formed over a length equal to the distance that rack shaft 26 slides.

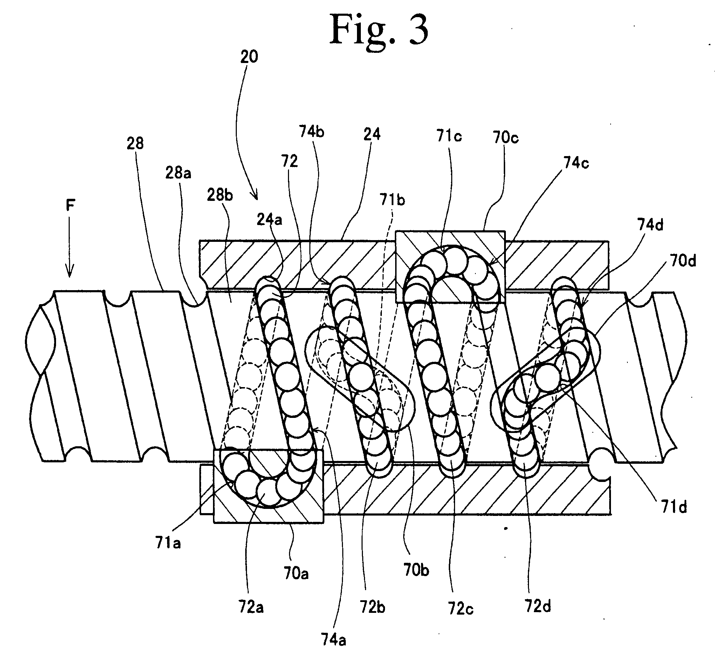

Referring to Fig. 3, hereinafter the structure of the deflector type ball screw 20 will be described in further detail. Fig. 3 is a cross section view of the components of the deflector type ball screw 20.

As shown in Fig. 3, a plurality of balls 72 are rollably housed between an internal thread groove 24a of the ball nut 24 and an external thread groove 28a of the screw shaft 28. Four deflectors 70a to 70d are embedded in the ball nut 24. The four deflectors 70a to 70d are positioned with the same distance between them in an axial direction of the ball nut 24, and are offset 90° from each other in a circumferential direction. The respective deflectors 70a to 70d have respective guidance grooves 71a to 71d for guiding balls 72 so that they can return to an adjacent screw groove 28a passing beyond a respective screw thread 28b of the screw shaft 28. The deflectors 70a to 70d function as by-passes linking adjacent internal thread grooves 24a of the ball nut 24. As a result of deflectors 70a to 70d guiding balls 72, the screw groove 24a of the ball nut 24 is divided into four circulation passages 74a to 74d. Hereinafter, the balls 72 that are rollably housed in the first to fourth circulation passages 74a to 74d will be referred to as the first to fourth ball groups, respectively.

In this embodiment, a diameter of the balls of the second and third ball groups 72b and 72c is larger than a diameter of the first and fourth ball groups 72a and 72d. In particular, in this embodiment, when a diameter d is the nominal diameter used in a case in which all of the balls of ball groups 72a to 72 d have the same diameter; a diameter d1 is the ball diameter of the first and fourth ball groups 72a and 72d; and a diameter d2 is the ball diameter of the second and third ball groups 72b and 72c, d1=d and the relationship of 1.005d1≦d2≦1.1d1 is satisfied. Moreover, it is acceptable if d1 is set to be substantially equal to d. In particular, it is preferable to satisfy the relationship of 0.99<d1/d<1.01.

Hereinafter, the operation of the electric PS device 60 will be described. When the steering wheel 40 is steered, the pinion 44 revolves. As a result of the pinion 44 revolving, the rack shaft 26 having the rack teeth 30 engaged with the pinion 44, moves in either of an axial direction in accordance with the rotation direction of the pinion 44.

Moreover, the steering torque of the steering wheel 40 is detected by the steering torque detection means 42 using a torsional angle of the shaft 62. The torsional angle detected by the steering torque detection means 42 is converted into a predetermined detection signal and output to the control means 46. The control means 46 that receives the detection signal, outputs a signal such that auxiliary torque is generated to the electric motor 48. The electric motor 48 that receives the signal from the control means 46 passes current into the stator coil 15 in accordance with the received signal. A magnetic field is generated in the stator coil 15, and as a result the rotor 13 including the magnetic 16 is rotated in either of a forward or reverse direction. The bolt 24 fixed to the output shaft 14 also rotates along with the rotation of the rotor 13. When the bolt 24 rotates, a thrust force acts upon the external thread groove of the screw shaft 28 through the balls 72 housed in each circulation passage 74a to 74d. The rack shaft 28 is moved in the axial direction by this thrust force.

In this manner, both the torque from the pinion 44 and the auxiliary torque from the electric motor 48 are transmitted to the rack shaft 26, thus moving the rack shaft 28 in the axial direction. When the rack shaft 28 is moved in the axial direction, the wheels 56 are turned by tie rods 52 fixed to the rack shaft 28 and knuckle arms 54 that are connected to the tie rods 52.

The electric PS device 60 assists the steering effort of the steering wheel of the driver using the generation of auxiliary torque by the electric motor 48.

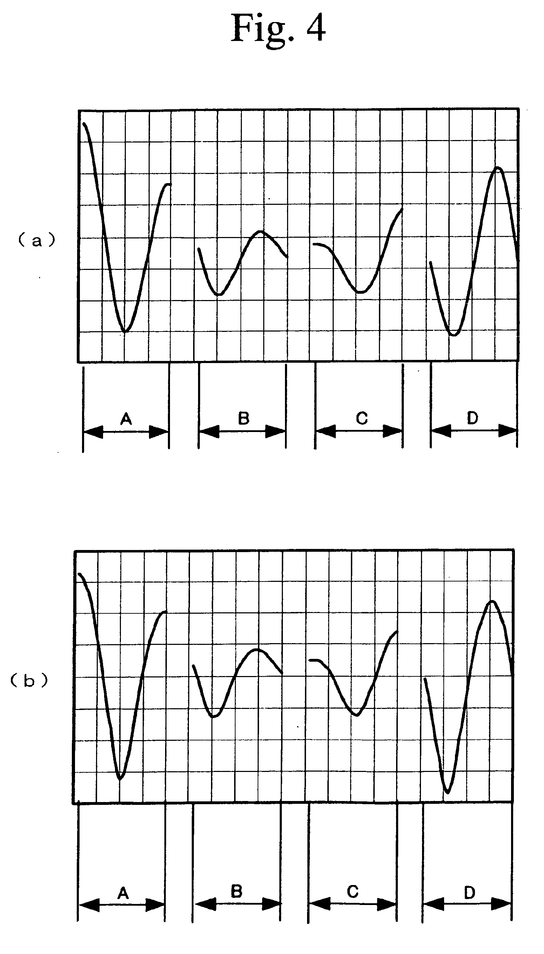

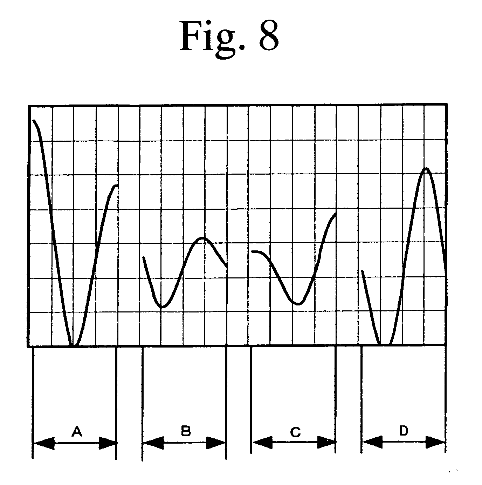

Referring to Fig. 4 to Fig. 9, estimated results derived by computer analysis are shown for the load applied to and contact pressure of each ball group when the diameters of the balls of the first to fourth ball groups 72a to 72d are changed and when a force (a force F in Fig. 3) is applied to the rack shaft 26 in a radial direction. Symbols A to D shown on horizontal axes of Fig. 4 to Fig. 9 represent the first to fourth ball groups 72a to 72d. Vertical axes of each Figure (a) show the load applied to each ball. Vertical axes of each figure (b) show the contact pressure of each ball (more precisely, since the contact pressure of each ball is distributed across the surface of the ball, the maximum contact pressure among all of the contact pressures was estimated). However, Fig. 8 shows only the load applied to each ball and does not show estimated results for contact pressure. Furthermore, each figure shows plot points that have been linked by a smoothed line for the estimated results of the load applied to and contact pressure of each ball.

Referring to Fig. 4, estimated results for a case in which the ball diameters of the first to fourth ball groups are uniform (in a case when d1=d2=d) will be described. The ball diameter (d) selected is an appropriate ball diameter, namely, the nominal diameter. This diameter was employed by persons skilled in the art while taking into consideration a width and a depth of each screw groove 24a and 28a.

As shown in Fig. 4(a), the load applied to many of the balls of the first and fourth ball groups 72a and 72d, is larger than the load applied to the balls of the second and third ball groups 72b and 72c. Furthermore, as shown in Fig. 4 (b), since all of the balls have a uniform diameter, the contact pressure of the first and fourth ball groups 72a and 72d to which larger load is applied becomes greater.

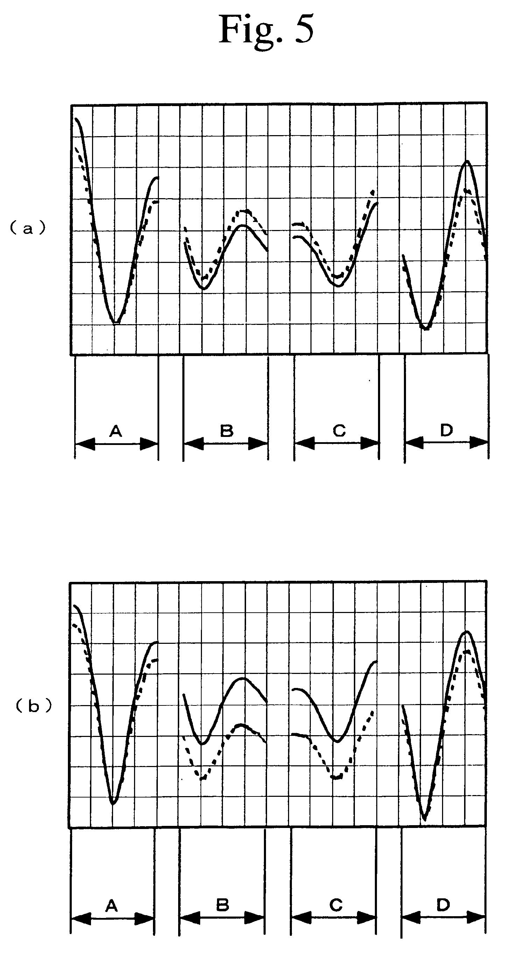

Referring to Fig. 5 to Fig. 8, estimated results in a case when the ball diameter of the first to fourth ball groups 72a and 72d is set to the nominal diameter (d1=d) and the ball diameter of the second and third ball groups 72b and 72c is set to a value larger than the nominal diameter are described. The solid lines in Fig. 5 to Fig. 7 show estimated results a case in which ball diameter is uniform (d1=d2=d), and the broken lines are for when the ball diameter of second and third ball groups 72b and 72c is larger than the nominal diameter (d2=n' d1, where n>1). However, Fig. 8 shows only the case in which the ball diameter is larger than the nominal diameter, and does not show the case in which the diameter of the balls is uniform.

Fig. 5 shows estimated results in the case that d2=1.05d1.

As shown in Fig. 5(a), as compared to the case in which the balls have a uniform diameter, the load applied to the first and fourth ball groups 72a and 72d is reduced and the load applied to the second and third ball groups 72b and 72c is increased.

Furthermore, as shown in Fig. 5(b), the contact pressure of the first and fourth ball groups 72a and 72d, having reduced applied load, is reduced. In the case of the second and third ball groups 72b and 72c, the contact area between each ball and the groove is increased since ball diameter has been increased. Consequently, although the load applied to each ball is increased, the contact pressure is reduced.

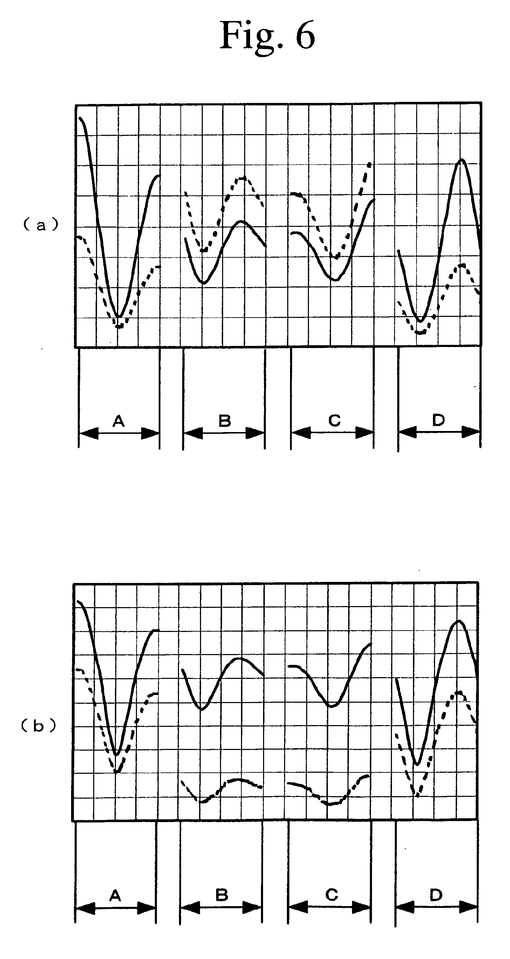

Fig. 6 shows estimated results in a case that d2=1.d1.

As shown in Fig. 6(a), the load applied to the first and fourth ball groups 72a and 72d is reduced significantly, compared to the case in which the balls have a uniform diameter. On the other hand, as compared to the case in which the balls have a uniform diameter, the load applied to the second and third ball groups 72b and 72c is increased significantly, although this load is still less than the load applied to the first and fourth ball groups 72a and 72d in the case in which the ball diameter is uniform.

As shown in Fig. 6(b), the load applied to the first and fourth ball groups 72a and 72d is reduced significantly and thus the contact pressure of the first and fourth ball groups 72a and 72d is also reduced significantly. On the other hand, the contact area between the balls of the second and third ball groups 72b and 72c and the groove is increased substantially, and thus the contact pressure of the second and third ball groups 72b and 72c is reduced significantly.

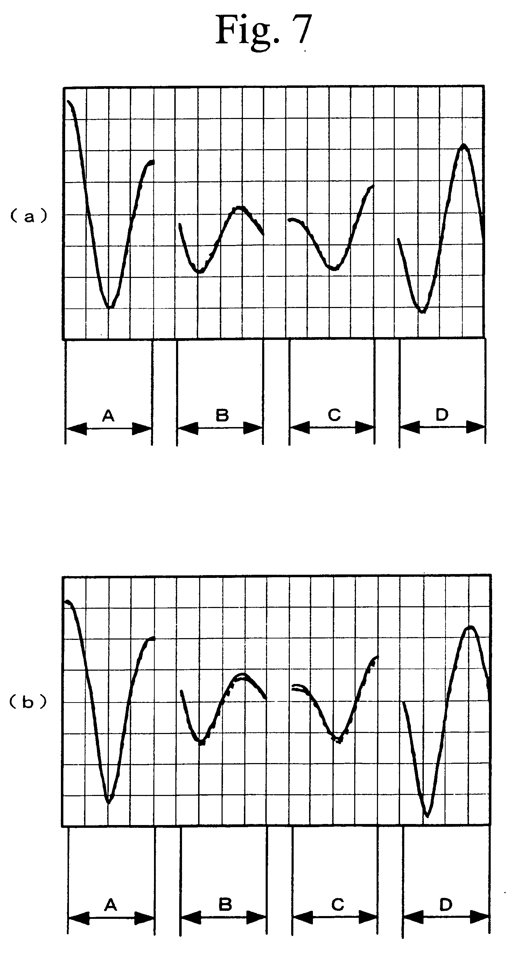

Figure 7 shows estimated results in a case in which d2=1.005d1.

As shown in Fig. 7(a), the load applied to the first and fourth ball groups 72a and 72d is reduced slightly. Moreover, the load applied to second and third ball groups 72b and 72c is increased slightly.

It is clear from Fig. 7 (b) that the contact pressure of all of the ball groups 72a to 72d is reduced.

It is apparent from these estimated results that if d2 is less than 1.005 times d1, then the load applied to the first and fourth ball groups 72a and 72d does not reduce to any significant degree, compared to the case in which the balls have a uniform diameter.

Fig. 8 shows estimated results for the load applied to each ball group in the case that d2=1.105d.

As shown in Fig. 8, it is clear that in this case there are balls in the first and fourth ball groups 72a and 72d that are in a load-free state with no applied load. In the case that d2=1.1d1 (Fig. 6), load-free balls like this are not present. Consequently, it has been confirmed that load-free balls with no applied load in the first and fourth ball groups 72a and 72d are present if d2 is greater than 1.1 times d1.

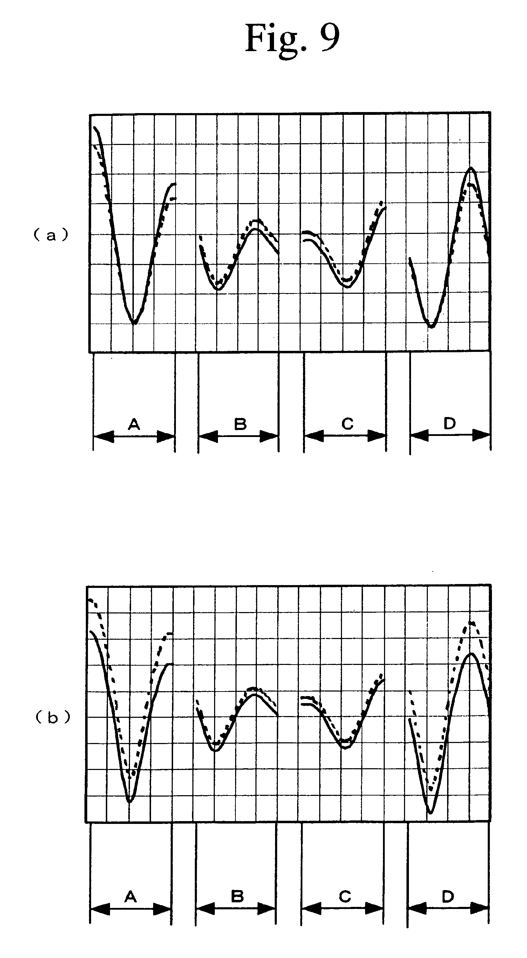

Fig. 9 shows estimated results for the load applied to and contact pressure of each ball in a ball screw having balls of the second and third ball groups 72b and 72c with the nominal diameter (d2=d) and also having balls of the first and fourth ball groups 72a and 72d with a diameter smaller than the nominal diameter, in a case that, the radial force F is acting on the rack shaft 26 in a manner similar to that previously mentioned. The horizontal and vertical axes of Fig. 9(a) and (b) are the same as aforementioned Fig. 4 to Fig. 7. The solid lines in Fig. 9 show estimated results for the case that d1=d2=d, and the broken lines are for the case that d1=0.95d2.

As shown in Fig. 9(a), the load applied to the first and fourth ball groups 72a and 72d is reduced and the load applied to the third and fourth ball groups is increased compared to the case in which the balls are of a uniform diameter.

Meanwhile, as shown in Fig. 9(b), the load applied to the balls of the second and third ball groups 72b and 72c is increased and thus the contact pressure of the balls is also increased. The ball diameter of the balls of first and fourth ball groups 72a and 72d is reduced. However, although this results in the contact area between the balls and groove becoming smaller and the applied load being reduced, the contact pressure is increased.

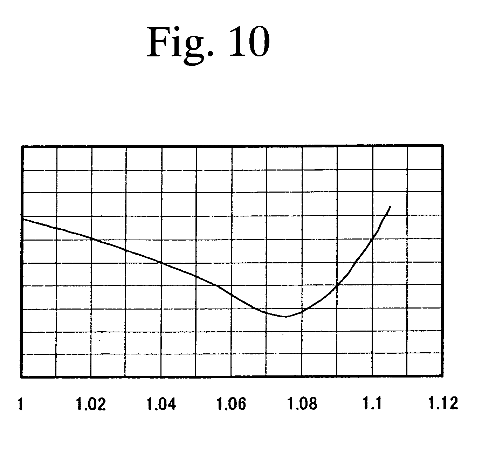

Fig. 10 shows estimated results for the amount of load variation when the radial force F is applied in a case that d1=d and d2 is larger than the nominal diameter. The amount of load variation is the difference between the load of the ball that has the largest applied load and the load of the ball that has the smallest applied load. By estimating the amount of load variation, it becomes possible to evaluate whether the balance of the load applied to the balls is good or bad. The balance of the load applied to the balls improves as the amount of load variation is reduced.

The horizontal axis of Fig. 10 shows a value of d2/d1 when d2 has been changed. Hereinafter, this value will be referred to as the nonuniform rate. The vertical axis of Fig. 10 shows the amount of load variation.

As shown in Fig. 10, the amount of load variation is reduced as the nonuniform rate is increased up to the vicinity of 1.075. However, when the nonuniform rate exceeds 1.075, the amount of load variation is increased while the rate of this increase rises.

Based on the estimated results of Fig. 10, it is possible to conclude that the balance of the load applied to balls is substantially excellent when the nonuniform rate is 1.005 or greater, compared to the case in which the balls have a uniform diameter (in the case that d2/d1=1). Moreover, if the amount of load variation when the nonuniform rate is 1.005 is set as a reference, then the upper limit of the nonuniform rate is at 1.102. However, since the rate of increase of the amount of load variation in this vicinity is high, it is preferable to set the upper limit to 1.1.

The estimated results of previously explained Fig. 4 to Fig. 10 show that if d2 is 1.005 times d1 or more, when the radial force F is acting upon the rack shaft 26 forming the screw shaft 28, the load applied to the first and fourth ball groups 72a and 72d is reliably reduced compared to the case in which the balls have a uniform diameter. Furthermore, by setting the ball diameter of the first to fourth ball groups 72a and 72d to the nominal diameter, the load applied to the balls of first and fourth ball groups 72a and 72d is reduced compared to the case in which the balls have a uniform diameter, and the contact pressure is reduced. In the case of the second and third ball groups 72b and 72c, the contact area between the balls and the groove is increased compared to the case in which the balls have a uniform diameter, and thus, the contact pressure is reduced although the load is increased. Accordingly, in the deflector type ball screw 20 according to the embodiment, when the radial force F is acting upon the rack shaft 26, damage of deflectors 70a to 70d, the ball nut 24 and the screw shaft 28 constituting the deflector type ball screw 20, is reliably reduced (suppressed), compared to the case in which the balls have a uniform diameter.

Moreover, if the ball diameter of the balls of the second and third ball groups 72b and 72c is 1.1 times the ball diameter of the balls of the third and fourth ball groups 72a and 72d or more, then load is applied to all balls of the first and fourth ball groups 72a and 72d, and thus no load-free balls are present. In the deflector type ball screw according to the embodiment, even if the radial force F acts upon the rack shaft 26, vibrations or noise are eliminated or suppressed, thereby eliminating or reducing a sense of discomfort of the driver.

Furthermore, due to the range of d1 and d2 selected for the deflector type ball screw 20 according to the embodiment, an outstanding balance of the load applied to the balls is realized.

While the invention has been described in detail with reference to the preferred embodiment, it will be apparent to those skilled in the art that the invention is not limited to the present embodiment, and that the invention may be realized in various other embodiments within the scope of the claims.

For example, in the aforementioned embodiment the four circulation passages 74a to 74d are formed in the deflector type ball screw 20. However, it is possible to make appropriate changes to the number of circulation passages. Moreover, Fig. 4 and the figures thereafter show cases in which a force acts upon the screw shaft of the ball screw in a radial direction. However, it has also been confirmed that when a load acts in a sliding direction as well, the load is equalized and contact pressure is reduced.

Furthermore, the technological components described in this specification and illustrated in the drawings can demonstrate their technological usefulness independently through various other combinations which are not limited to the combinations described in the claims made at the time of application. Moreover, the art described in this specification and illustrated in the drawings can simultaneously achieve a plurality of objectives, and is technologically useful by virtue of realizing any one of these objectives.

A deflector type ball screw includes a screw shaft having an external thread groove in an outer peripheral surface, a ball nut having an internal thread groove in an inner peripheral surface and a plurality of balls that are rollably housed between the internal thread groove and the external thread groove, and four deflectors fixed to the ball nut. The deflectors function as by-passes linking adjacent internal thread grooves of the ball nut. As a result of the deflectors guiding the balls, the screw groove of the ball nut is divided into four circulation passages.

When a diameter d is the nominal diameter used in a case in which all of the balls of ball groups 72a to 72 d have the same diameter; a diameter d1 is the ball diameter of the ball groups housed in first and fourth circulation passages; and a diameter d2 is the ball diameter of the ball groups housed in second and third circulation passages, d1=d and the relationship of 1.005d1 ≦d2≦1.1d1 is satisfied.

## Claims

1. A ball screw, comprising:
a screw shaft having an external thread groove in an outer peripheral surface; and
a ball nut having an internal thread groove in an inner peripheral surface; and
a plurality of balls rollably housed between the external thread groove and the internal thread groove, the internal thread groove of the ball nut being divided into at least three circulation passages in an axial direction of the ball nut, wherein;
a diameter of the balls housed in the circulation passages at the axial direction end portions of the ball nut is d1, a diameter of balls housed in the one or more circulation passages inward in an axial direction from the end portion circulation passages is d2, and a relationship between the d1 and the d2 is set such that 1.005d1 ≦ d2≦1.1d1.

2. The ball screw according to Claim 1, wherein the d1 is set to be substantially equal to a diameter d, which is an appropriate ball diameter in a case in which balls with a uniform diameter are used in all of the circulation passages.

3. An electric power steering including the ball screw according to Claim 1 or Claim 2.
